# EUROPÄISCHE PATENTANMELDUNG

(11) **EP 0 534 925 A2**
(43) Veröffentlichungstag der Anmeldung: **31.03.1993**
(21) Anmeldenummer: 92890188.3
(22) Anmeldetag: 01.09.1992
(51) Int. Cl.: F16D 3/72

(54) **Kupplungsglied aus faserverstärktem Kunststoff**

(30) Priorität: 24.09.1991 AT 1921/91
(71) Anmelder: DR. ING. GEISLINGER & CO. SCHWINGUNGSTECHNIK GESELLSCHAFT m.b.H., A-5020 Salzburg (AT)
(72) Erfinder: Pfeifer, Peter, Dipl.-Ing., A-5020 Salzburg (AT)
(74) Vertreter: Hübscher, Heiner, Dipl.-Ing.

(57) **Zusammenfassung**

Ein Kupplungsglied (1) zum Einbau in eine drehmomentübertragende Antriebsverbindung umfaßt einen Rohrteil (2) und wenigstens einen stirnseitig anschließenden Flanschteil (3), wobei Rohr- und Flanschteile (2, 3) aus faserverstärktem Kunststoff bestehen. Um auf rationelle Weise eine wesentliche Steigerung der Ausgleichskapazität zu erreichen, bildet der Flanschteil (3) zwischen einem äußeren Befestigungsbereich (5) und einem inneren Übergangsbereich (6) einen Verformungsbereich (7), der im Axialschnitt eine radial auswärts abnehmende Wandstärke (9) und/oder eine Wellenprofilierung (8) aufweist.

## Beschreibung

Die Erfindung bezieht sich auf ein Kupplungsglied zum Einbau in eine drehmomentübertragende Antriebsverbindung mit einem Rohrteil und wenigstens einem stirnseitig anschließenden Flanschteil, wobei Rohr- und Flanschteile aus faserverstärktem Kunststoff bestehen.

Kupplungsglieder aus faserverstärktem Kunststoff haben sich bereits bestens bewährt, da sie bei ihrem Einsatz als Verbindungselement zwischen den beiden Hälften einer Wellenkupplung oder unmittelbar als Wellenteil in einem Antriebsstrang nicht nur wegen des speziellen Verlaufes ihrerVerstärkungsfasern eine einwandfreie Drehmomentübertragung gewährleisten, sondern auch wegen der Biegefähigkeit ihrer membranförmigen Flanschteile einen axialen und bei Vorhandensein beidseitiger Flanschteile sogar einen radialen Versatz der miteinander zu kuppelnden Antriebsteile auszugleichen erlauben. Darüber hinaus kommt es durch das Kunststoffmaterial des Kupplungsgliedes zu einer guten Schalldämmung, die eine Weiterleitung von Körperschall im vermindert. Wie die EP-A1-0 413 677 zeigt, besitzen die bekannten Kupplungsglieder Flanschteile, die bis auf einen Übergangsbereich zum Rohrteil hin in einer achsnormalen Ebene liegen und konstante Wandstärke besitzen. Dadurch bleibt allerdings unter Berücksichtigung der Torsionsbelastung für die zu übertragenden Drehmomente die Biegefähigkeit und damit die Ausgleichsfähigkeit bei einem Wellenversatz od. dgl. beschränkt.

Zur Verbesserung der Biegefähigkeit wurde bei Metallmembranen auch schon vorgeschlagen, die Membranfläche nicht eben sondern wellig auszubilden, doch scheiterte bisher diese theoretische Möglichkeit einer Steigerung der Biegeweichheit von Membranen und deren Einsatz in Ausgleichskupplungen an der praktischen Umsetzung, da die Herstellung einer gewellten Metallmembran zu aufwendig und schwierig wäre.

Aus der CH-PS 484 376 geht auch schon eine elastische Kupplung zur Drehmomentenübertragung als bekannt hervor, die aus einem Übertragungsrohr und beiderends jeweils zwei ringförmigen, elastischen Scheiben zum Anschluß an einer An- bzw. Abtriebswelle besteht. Diese beiden Scheiben sind am äußeren Umfang starr miteinander verbunden und am inneren Umfang unter Zwischenlage einer eigenen Feder gegeneinander axialbeweglich abgestützt, wobei die inneren Teile der Scheiben eine radial auswärts abnehmende Wandstärke besitzen und mit Abstand voneinander angeordnet sind, um eine gewisse Elastizität zu gewährleisten. Es kommt zu einer recht aufwendigen Kupplung, die zwar axiale Druck- und Zugbeanspruchungen aufnehmen, aber nur sehr geringe Wellenversätze od. dgl. ausgleichen kann. Die abnehmende Wandstärke der metallenen Scheiben dient dabei vor allem einer Gewichts- und Materialeinsparung und nicht der Erhöhung der Biegefähigkeit, die durch die Paaranordnung der Scheiben von vornherein stark beeinträchtigt ist.

Der Erfindung liegt daher die Aufgabe zugrunde, diese Mängel zu beseitigen und ein Kupplungsglied der eingangs geschilderten Art zu schaffen, das sich bei hoher Torsionsbelasbarkeit durch die besondere Biegefähigkeit seiner Flanschteile auszeichnet und damit den Ausgleich auch eines verhältnismäßig großen Versatzes der zu kuppelnden Antriebsteile gewährleistet.

Die Erfindung löst diese Aufgabe dadurch, daß der Flanschteil zwischen einem äußeren Befestigungsbereich und einem inneren Übergangsbereich einen Verformungsbereich bildet, der im Axialschnitt eine Wellenprofilierung und/oder in an sich bekannter Weise eine radial auswärts abnehmende Wandstärke aufweist. Durch die Formgebung bzw. den Wandstärkenverlauf dieses Verformungsbereiches entsteht ein gegenüber den äußeren und inneren Randbereichen biegeweicher Innenbereich des Flanschteiles, der durchaus drehsteif ist und die zu übertragenden Drehmomente einwandfrei aufnimmt, aber innerhalb relativ weiter Grenzen aus der Achsnormalebene ausgelenkt werden kann. Dadurch läßt sich der Rohrteil gegenüber dem Flanschteil entsprechend weit axial verschieben oder abwinkeln, so daß ein Kupplungsglied mit gewünschtem Ausgleichsverhalten entsteht. Dabei kommt es bei der Herstellung kaum zu einem Mehraufwand, da Rohr- und Flanschteile nach jedem geeigneten Verfahren zur Verarbeitung faserverstärkter Kunststoffe gefertigt werden können und demgemäß die Profilierung und Formgebung der Flanschteile unmittelbar im Zuge dieses Ferti- gungsverfahrens erfolgt oder durch einen eigenen Formgebungsschritt mittels einer formgebenden Presse od. dgl. aufgebracht wird.

Zur Anpassung der Biegefähigkeit an die unterschiedlichsten Bedingungen und zur Beeinflussung des Biegeverlaufes kann die Wellenhöhe und/oder Wellenlänge der Wellenprofilierung radial auswärts abnehmen, wodurch sich die Biegeeigenschaften des Verformungsbereiches radial ändern und eine mehr oder weniger weiche Abnahme der Biegesteifigkeit eintritt. Günstige Biegekapazitäten über weite Einsatzbereiche ergeben sich, wenn die Wellenhöhe und die Wellenlänge durchschnittlich dem 5 - 10fachen der Wandstärke entsprechen.

Das Kupplungsglied kann durchaus einstückig hergestellt werden, wozu sich die verschiedenen Lege-, Flecht- und Wickelverfahren eignen. Ist hingegen der Flanschteil vom Rohrteil getrennt vorgefertigt und mit dem Rohrteil verklebt, ergibt sich eine besonders rationelle Herstellung, da die Einzelteile für sich individuell gestaltet und nach dem jeweils geschicktesten Verfahren gefertigt werden können und es auch zu keiner gegeseitigen Abhängigkeit der Teile beispielsweise hinsichtlich der Faserstruktur und -orientierung kommt. Außerdem werden dadurch die Möglichkeiten verbessert, die Biege- und Festigkeitseigenschaften der Teile zusätzlich zur geometrischen Ausgestaltung durch die Anordnung und den Verlauf der Verstärkungsfasern zu beeinflussen, welche Möglichkeiten grundsätzlich ja auch bei einem einstückigen Kupplungsglied bestehen.

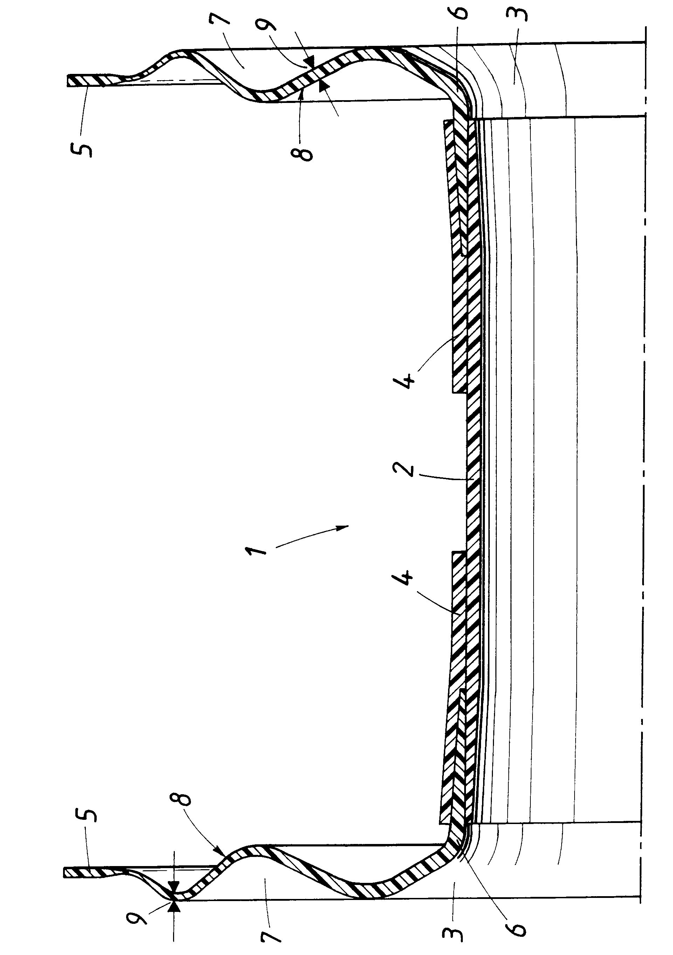

In der Zeichnung ist ein Ausführungsbeispiel eines erfindungsgemäßen Kupplungsgliedes in einem hälftigen Axialschnitt schematisch veranschaulicht.

Ein beugeelastisches, torsionssteifes Kupplungsglied 1 umfaßt einen Rohrteil 2 und zwei stirnseitig anschließende Flanschteile 3, wobei Rohr- und Flanschteile 2, 3 aus faserverstärktem Kunststoff bestehen. Die Rohr-und Flanschteile 2, 3 können, wie dargestellt, voneinander getrennt vorgefertigt und dann unter Verwendung von ebenfalls aus faserverstärktem Kunststoff bestehenden Muffen 4 miteinander verklebt sein.

Zur Verbesserung der Biegeeigenschaften der Flanschteile 3 und damit zur Steigerung der Ausgleichskapazität des Kupplungsgliedes 1 gegenüber einem axialen und/oder radialen Versatz der miteinander zu kuppelnden Antriebsteile weist jeder der Flanschteile 3 zwischen einem äußeren Befestigungsbereich 5 und einem inneren Übergangsbereich 6 einen Verformungsbereich 7 auf, der aufgrund einer wellenprofilierung 8 und/oder einer abnehmenden Wandstärke 9 besonders biegeweich ist. Durch eine radial auswärts abnehmende Wellenhöhe und/oder Wellenlänge dieser Wellenprofilierung 8 läßt sich außerdem der radiale Verlauf der Biegeeigenschaften beeinflussen und beispielsweise für eine entsprechend sanfte Änderung der Biegeweichheit sorgen.

Die besonderen Biegeeigenschaften der Flanschteile 3 und die Herstellung aus faserverstärktem Kunststoff ergeben ein torsionssteifes Kupplungsglied 1, das sich bei rationeller Herstellung nicht nur durch seine schalldämmende Wirkung auszeichnet, sondern vor allem auch einen Ausgleich größerer axialer und auch radialer Versätze innerhalb einer Antriebsverbindung ermöglicht.

## Patentansprüche

1. Kupplungsglied (1) zum Einbau in eine drehmomentübertragende Antriebsverbindung, mit einem Rohrteil (2) und wenigstens einem stirnseitig anschließenden Flanschteil(3), wobei Rohr-und Flanschteile (2,3) aus faserverstärktem Kunststoff bestehen, dadurch gekennzeichnet, daß der Flanschteil (3) zwischen einem äußeren Befestigungsbereich (5) und einem inneren Übergangsbereich (6) einen Verformungsbereich (7) bildet, der im Axialschnitt eine Wellenprofilierung (8) und/oder in an sich bekannter Weise eine radial auswärts abnehmende Wandstärke (9) aufweist.

2. Kupplungsglied nach Anspruch 1, dadurch gekennzeichnet, daß die Wellen höhe und/oderWellenlänge der Wellenprofilierung (8) radial auswärts abnimmt.

3. Kupplungsglied nach Anspruch 1 oder2, dadurch gekennzeichnet, daß die Wellenhöhe und die Wellenlänge durchschnittlich dem 5 - 10fachen der Wandstärke entsprechen.

4. Kupplungsglied nach einem der Ansprüche 1 - 3, dadurch gekennzeichnet, daß der Flanschteil (3) vom Rohrteil (2) getrennt vorgefertigt und mit dem Rohrteil (2) verklebt ist.
